# EUROPEAN PATENT SPECIFICATION

(11) **EP 1 816 096 B1**
(45) Date of publication and mention of the grant of the patent: **18.03.2009**
(21) Application number: 07101627.3
(22) Date of filing: 02.02.2007
(51) Int. Cl.: B65G 57/03, B65G 57/16, B65G 59/02, B65G 59/10, B65G 60/00

(54) **System and method for handling reusable boxes**
System und Verfahren zur Handhabung wiederverwendbarer Behälter
Système et procédé pour la manipulation de boîtes réutilisables

(30) Priority: 07.02.2006 IT TO20060084
(43) Date of publication of application: 08.08.2007
(73) Proprietor: Fameccanica.Data S.p.A., 66020 Sambuceto di S. Giovanni Teatino (Chieti) (IT)
(72) Inventor: DI DONNA, Mario, 83031, Ariano Irpino (Avellino) (IT); ROMANELLI, Camillo, 65016, Montesilvano (Pescara) (IT)
(74) Representative: Marchitelli, Mauro

(56) References cited:
- FR-A- 2 512 425
- US-A- 3 603 479
- US-A- 4 167 364
- US-A- 5 791 867

## Description

The present invention relates to a system and a method for handling reusable boxes, according to the preamble of independent claims 1 and 9 respectively.

Reusable boxes are rented to a user for a specific time. At the end of their use, the boxes are returned to the supplier in their present conditions (generally dirty). The supplier performs a reconditioning of the boxes and then delivers them for further use. At the time of delivery, the supplier ensures that the boxes are clean, in good condition and ready for use. The user pays a rent for the use of the boxes, thus avoiding all costs related to their management. Boxes to be reconditioned and reconditioned boxes are, respectively, received and dispatched on pallets, each of which contains a certain number of stacks of boxes, each of which comprises a predetermined number of interlocked i.e. nested boxes (for example twenty boxes).

Document FR-A-2 512 425 discloses the preamble of independent claims 1 and 9 respectively.

To perform reconditioning of the boxes, handling activities must be performed comprising destacking the boxes and, after the cleaning, washing and drying operations, restacking the boxes to form stacks of reconditioned boxes.

The object of the present invention is to providing a system and a method for handling reusable boxes, with greater productivity and efficiency than systems and methods of known type.

According to the present invention, this purpose is achieved by a system and a method having the characteristics subject of the attached claims 1 and 9 respectively.

The characteristics and advantages of the present invention will become clear during the detailed description that follows, given purely as a non limiting example, in which:
- figure 1 is a schematic side view showing a destacking unit according to the present invention,
- figure 2 is a perspective view of the unit of figure 1,
- figure 3 is a schematic side view of a restacking unit according to a variant of the present invention,
- figure 4 is a perspective view of the unit of figure 3,
- figure 5 is a perspective view of a cleaning unit according to the present invention,
- figure 6 is a perspective view of a reusable plastic box fitted with mobile arms to enable the superimposition of full boxes, and
- figure 7 is a perspective view of a device for the automatic closing of the arms of the boxes.

The box reconditioning plant according to the present invention receives pallets of dirty boxes. Each pallet contains for example five piles of boxes, each of which comprises for example twenty interlocked boxes.

The stacks are unloaded from the pallets in a depalletiser and are sent to one or more destacking units by means of conveyors. The destackers extract the boxes from the stacks and send them individually to a washing machine by means of conveyors. Before reaching the washing machine the boxes pass through a preliminary cleaning unit that removes any voluminous residues still present on the boxes.

In the washing machine, the boxes are washed with hot water under pressure containing detergents and are then dried in a drying system. On leaving the drying system, the boxes are transferred to a restacking unit by means of conveyors. The restacking units form stacks of interlocked boxes that are then sent by means of conveyors to a palletiser.

The palletiser transfers the stacks onto pallets, which are then sent to a wrapping machine that wraps the pallets with a film of plastic material.

At the end of the reconditioning process, the result is a pallet wrapped in a film of plastic, formed for example of five stacks of twenty boxes each, which is stored to await utilisation.

To improve the hourly production rate of reconditioned plastic boxes, the present invention proposes a new box destacking system and a new box restacking system. The present invention also proposes a perfected system for cleaning the boxes before the washing operation.

The operations of depalletising, washing, drying, palletising, wrapping with plastic film and conveyance to and from the various operative phases of the reconditioning process are obtained through systems of conventional type available on the market. These commercially-available systems are not described in the present application since they are outside the scope of the invention and are known to a man skilled in the art.

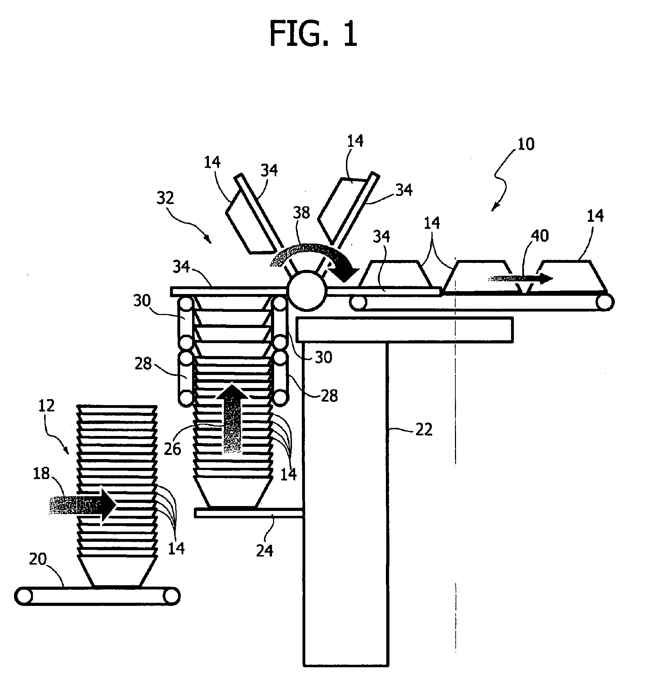

With reference to figures 1 and 2, 10 indicates a destacking unit capable of extracting individual boxes 14 from a stack 12 of boxes to be reconditioned, which are then removed individually by means of a conveyor 16. The stacks 12 are each formed of a plurality of interlocked boxes 14. The stacks 12 advance in the direction indicated by the arrow 18 on a conveyor 20 and are oriented in a vertical direction, with the opening of the boxes 14 facing upwards.

The destacking unit 10 includes a stationary support structure 22 bearing an elevator 24 that receives the stacks 12 from the conveyor 20 and raises them in the direction indicated by the arrow 26 in figure 1.

The destacking unit 10 includes two vertical feeders 28, 30. The first feeder 28 is preferably formed of motorised smooth belts that transfer the boxes 14 to the second feeder 30 preferably formed of double-toothed belts. If necessary, a box blocking system may be provided between the two feeders 28, 30. The second feeder 30 has a higher speed then the elevator 24 so that it performs a pre-extraction of the boxes 14.

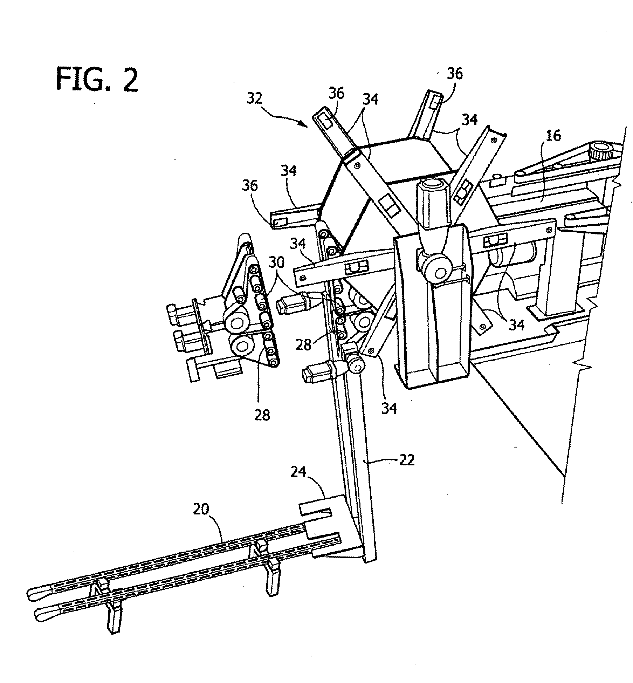

The destacking unit 10 includes a destacking wheel 32 including a plurality of arms 34 rotating around a horizontal axis situated in correspondence with the upper extremity of the second feeder 30. As shown in figure 2, the destacking wheel 32 comprises two series of arms 34 situated laterally and externally with respect to the upwardly moving stack 12. Each pair of arms 34 is fitted with gripping members 36 capable of grasping the box 14 at the top of the stack 12.

Each pair of arms 34 is displaceable between a grip position and a release position. This displacement may be commanded by a cam or by pneumatic cylinders. The closing force with which the arms press laterally to grip a box may be varied by acting on an adjustable spring (not shown).

The boxes 14, pre-distanced one from the next by the double-toothed-belt feeder 30, move upwards and, at the top of the feeder 30, are taken up by the arms 34 of the destacking wheel 32. The boxes are extracted by the rotation of the arms 34, indicated by the arrow 38 in figure 1. The arms 34 overturn the boxes 14 and place them in an upturned position (that is with the opening facing downwards) on the conveyor 16 that moves the individual boxes 14 in the direction indicated by the arrow 40.

The destacking wheel 32 comprises a plurality of pairs of arms 34 whose speed of rotation is co-ordinated with the speed of upward movement of the stack 12 and with the speed of advancement of the conveyor 16.

When the stack 12 being handled is finished, the elevator 24, which at that moment is at its maximum height, inverts its direction of movement bringing itself into alignment with the conveyor 20 to load a new stack. In the transient during which the elevator 24 inverts its motion, the boxes 14 previously destacked and accumulated in a buffer form a dynamic reserve that enables continual operation of the system.

According to a particularly advantageous characteristic of the present invention, the elevator 24, the feeders 28, 30 and the destacking wheel 32 move with continuous motion, if desired with variable velocity but without stopping. The continual operation of the unit 10 enables the velocity to be increased markedly compared to known solutions characterised by alternating movement.

The unit 10 may also be used to restack the boxes 14 after the cleaning, washing and drying phases. From the standpoint of the operating principle, to cause the unit 10 to operate as a restacking unit it is sufficient to invert the direction of the arrows 18, 26, 30 and 40.

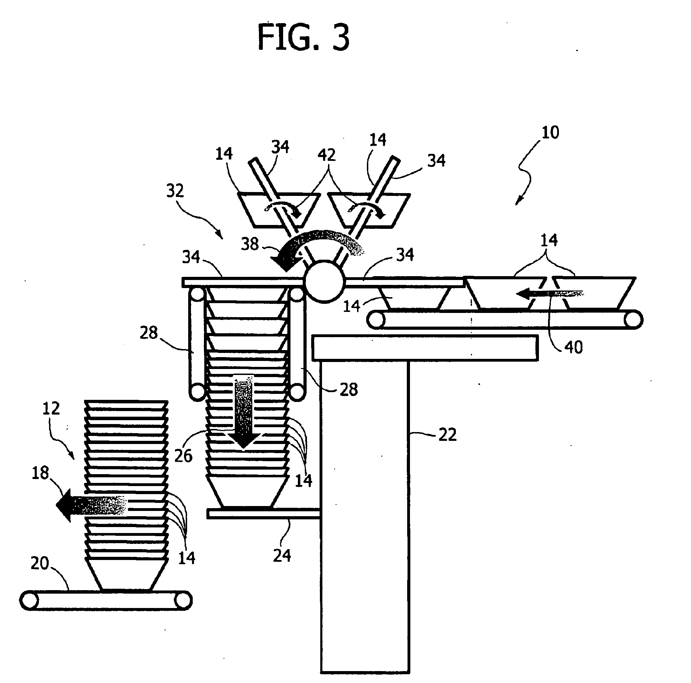

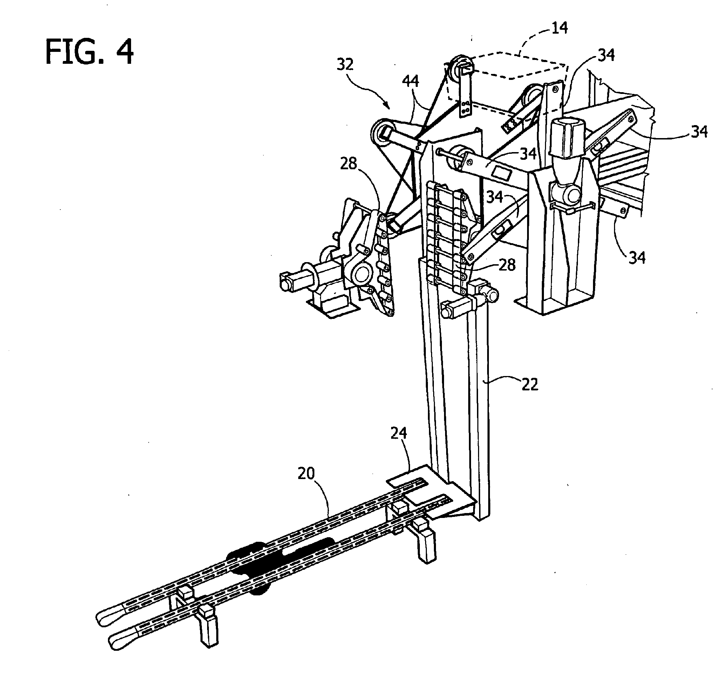

The diagram in figure 1 is adapted to the situations in which the orientation of the boxes 14 is changed during the destacking or restacking operation. Figures 3 and 4 show a variant that can be used in situations in which it is desired to maintain the same orientation of the boxes before and after the destacking or restacking operation. In the diagram in figure 3, the direction of the arrows relates to the restacking phase. The parts corresponding to those described above are indicated with the same reference numbers. With respect to the solution described above, the gripping members 36 of the arms 34 are provided with a rotation movement with respect to the arms 34, indicated by the arrows 42 in figure 3, so as to maintain the orientation of the boxes 14 constant during the destacking or restacking manoeuvre. In figure 4, 44 indicates toothed belts that command the rotation of the gripping members 36. With regard to the arrangement illustrated in figure 1, the unit illustrated in figure 3 comprises a single feeder 28 that replaces the two feeders 28, 30. Indeed, when the unit 10 operates as a restacking unit it is not necessary to perform pre-distancing of the boxes at the top of the stack 12. In the restacking modality, the feeder 28 causes the boxes 14 to interlock during formation of the stack 12. Also the unit illustrated in figures 3 and 4 may be used either as a destacking unit or as a restacking unit. Also in this case, to change operation from restacking to destacking it is sufficient to invert the directions of the arrows 18, 26, 38, 40 and 42 and, if necessary, to provide for one or two feeders 28, 30 depending on the type of operating modality.

As indicated above, after the destacking operation, the boxes 14 are sent in succession to a cleaning unit, a washing unit and a drying unit. The boxes are then sent to the restacking unit. Thus the system according to the present invention comprises at least one destacking unit and at least one restacking unit made as described above. In a preferred embodiment of the invention, the destacking unit is made as illustrated in figure 1 (destacking and overturning the boxes 14) whereas the restacking unit is made as shown in figure 3 (restacking without overturning the boxes). This choice is solely due to the fact that the boxes 14 leave the drying unit with their open sides facing upwards. If the boxes 14 were to leave the drying unit with their open sides facing downwards, a solution of the type shown in figure 1 might also be used for the restacking unit.

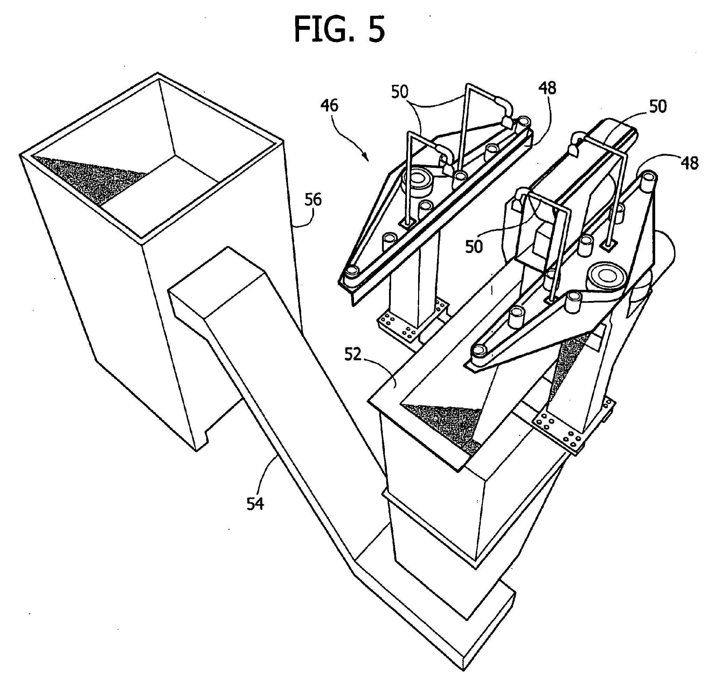

According to an advantageous aspect of the present invention, after the destacking phase, the boxes are sent to a cleaning unit before the washing phase, for the purpose of eliminating any solid refuse, for example sheets of paper or similar, remaining inside the boxes. Figure 5 shows a cleaning system 46 that comprises two lateral belt conveyors 48 that take up the boxes along their sides, so as to leave the open side of the boxes (facing downwards) free so that refuse can fall out. Along the route between the entrance and exit of the lateral conveyor 48, air is blown onto the boxes by means of nozzles 50 to help the refuse to detach and fall out. The refuse is collected in a channel 52 that transfers it to a conveyor 54 which discharges it into a removable container 56.

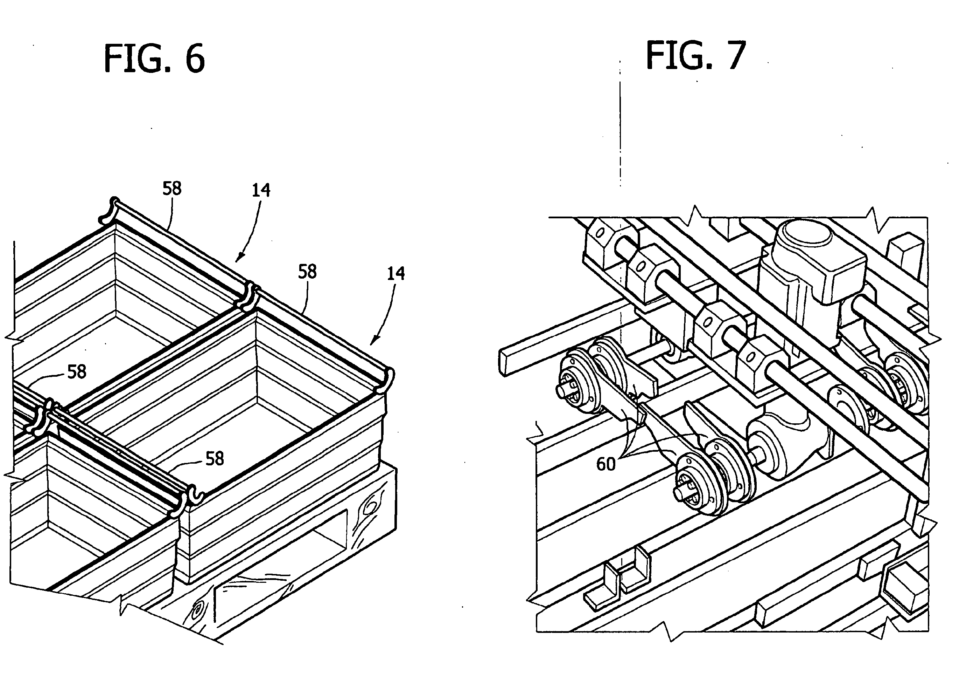

Figure 6 shows a box 14 fitted with movable arms 58 that can be displaced between an open position and a closed position. When the arms 58 are in the closed position, the boxes 14 can be interlocked with each other to form the stacks 12. When on the contrary the arms 58 are in the open position, the boxes 14 can be superimposed without interlocking.

During reconditioning, the movable arms 58 could accidentally open and stop the formation of the stacks. As a consequence, before the restacking operation it is necessary to ensure that the arms 58 are in the closed position.

The solution illustrated in figure 7 shows a device including rotating actuating members 60 with a cam profile having the shape of the envelope of the various positions of the movable arms 58 of the box 14 along its closing trajectory.

Naturally, the principle of the invention remaining the same, the details of construction and embodiments can be varied with regard to what is described and illustrated here, without departing from the scope of the present invention, as defined by the attached claims.

## Claims

1. System for handling reusable boxes, comprising:
- a conveyor (20) to feed stacks (12) of interlocked boxes (14),
- a destacking unit (10) capable of removing individual boxes to be reconditioned (14) from the stacks (12), and
- a restacking unit (10) capable of stacking successive boxes (14) to form stacks of interlocked reconditioned boxes,
- the destacking unit (10) and the restacking unit (10) each comprises:
- a stationary support structure (22), and
- an elevator element (24) movable in a vertical direction and bearing a stack (12) being formed or decomposed,
**characterised in that** the destacking unit (10) further comprising:
- at least one belt feeder (30) capable of performing a pre-extraction of the boxes (14) at the top of the stack (12) being decomposed, and
- a destacking wheel (32) rotating around a horizontal axis and comprising a plurality of pairs of arms (34) fitted with gripping members (36) capable of grasping the boxes (14) laterally and capable of taking individual boxes from the top of a stack (12) being decomposed and depositing the individual boxes (14) on a conveyor (16),
and wherein the restacking unit (10) comprises a restacking wheel (32) rotating around a horizontal axis and comprising a plurality of pairs of arms (34) fitted with griping members (36) capable of grasping the boxes (14) laterally and capable of taking up individual boxes that advance on said conveyor (16) and depositing the individual boxes (14) at the top of a stack (12) being formed.

2. System according to claim 1, **characterised in that** the gripping members (36) are fixed with respect to said arms (34), such that the destacking wheel (32) or the restacking wheel (32) performs the destacking or restacking operation by overturning the boxes (14).

3. System according to claim 1, **characterised in that** the gripping members (36) can rotate with respect to the arms (34) in the opposite defection with respect to the direction of rotation of the arms, in such a manner that the destacking wheel (32) or the restacking wheel (32) performs the destacking or restacking operation maintaining the orientation of the boxes (14) constant.

4. System according to claim 1, **characterised in that** it includes at least one smooth-belt feeder (28) capable of causing boxes (14) to advance in the direction of formation of the stack (12).

5. System according to claim 4, **characterised in that** said feeder (28, 30) has a greater speed than the speed of movement of the elevator element (24).

6. System according to claim 1, **characterised in that** it includes a cleaning unit (46) provided with a pair of lateral conveyor belts (48) capable of moving the boxes (14) without obstructing the open side of the boxes.

7. System according to claim 6, **characterised in that** the cleaning unit (46) includes means (50) to supply air jets to remove solid refuse from the inside of the boxes (14).

8. System according to claim 1, **characterised in that** it includes a station for closing movable arms (58) of the boxes (14), said station comprising a plurality of rotating actuating members (60) each having a profile corresponding to the envelope of the positions of the movable arm (58) of the.box (14) along its closing trajectory.

9. Method for handling reusable boxes, including the steps of:
- feeding a stack (12) of interlocked boxes (14) to a destacking unit (10),
- removing individual boxes from a stack (12) and feeding the boxes (14) to a cleansing and/or washing and/or drying unit, and
- staking the individual boxes (14) so as to form a stack (12) of interlocked reconditioned boxes,
**characterised in that** it includes the steps of:
- advancing in a continuous manner in a vertical direction a stack (12) of interclocked boxes (14) being decomposed,
- performing a pre-extraction of the boxes (14) at the top of the stack (12) being decomposed,
- removing individual boxes from the top of a stack (12) being decomposed by means of a destacking wheel (32) continuously rotating around a horizontal axis and comprising a plurality of pairs of arms (34) fitted with gripping members (36) capable of grasping the boxes (14) laterally and capable of taking and depositing the individual boxes (14) on a conveyor (16),
- restocking reconditioned boxes (12) by means of a restacking wheel (32) continuously rotating around a horizontal axis and comprising a plurality of pairs of arms (34) flitted with gripping members (36) capable of grasping the boxes (14) laterally and capable of taking up individual boxes that advance on said conveyor (16) and depositing the individual boxes (14) at the top of a stack (12) being formed.

## Patentansprüche

1. System zur Handhabung wiederverwendbarer Behälter, enthaltend:
- eine Fördereinrichtung (20), die Stapel (12) ineinandergeschachtelter Behälter (14) zuführt;
- eine Entstapeleinheit (10), die in der Lage ist, einzelne Behälter (14), die wiederhergestellt werden sollen, von den Stapeln (12) zu entnehmen; und
- eine Neustapeleinheit (10), die in der Lage ist, aufeinander folgende Behälter (14) zu stapeln, um Stapel ineinandergeschachtelter, wiederhergestellter Behälter auszubilden,
wobei die Entstapeleinheit (10) und die Neustapeleinheit (10) jeweils enthalten:
- eine stationäre Tragstruktur (22) und
- ein Hebeelement (24), das in einer vertikalen Richtung bewegt werden kann und einen Stapel (12) trägt, der ausgebildet oder zerlegt werden soll,
**dadurch gekennzeichnet, dass** die Entstapeleinheit (10) weiterhin enthält:
- wenigstens eine Bandzuführeinrichtung (30), die in der Lage ist, eine Vorextraktion der Behälter (14) an der Oberseite des Stapels (12) auszuführen, der zerlegt wird, und
- ein Entstapelrad (32), das sich um eine horizontale Achse dreht und eine Vielzahl von Armpaaren (34) enthält, die mit Greifelementen (36) versehen sind, die in der Lage sind, die Behälter (14) seitlich zu greifen, und in der Lage sind, einzelne Behälter von der Oberseite eines Stapels (12) zu nehmen, der zerlegt wird, und die einzelnen Behälter (14) auf einer Fördereinrichtung (16) abzustellen,
- wobei die Neustapeleinheit (10) ein Neustapelrad (32) enthält, das sich um eine horizontale Achse dreht und eine Vielzahl von Armpaaren (34) enthält, die mit Greifelementen (36) versehen sind, die in der Lage sind, die Behälter (14) seitlich zu greifen, und in der Lage sind, einzelne Behälter aufzunehmen, die sich auf der Fördereinrichtung (16) fortbewegen, und die einzelnen Behälter (14) an der Oberseite eines Stapels (12) abzusetzen, der ausgebildet wird.

2. System nach Anspruch 1, **dadurch gekennzeichnet, dass** die Greifelemente (36) im Bezug auf die Arme (34) derart fixiert sind, dass das Entstapelrad (32) oder das Neustapelrad (32) das Entstapeln oder das Neustapeln durch Umdrehen der Behälter (14) ausführt.

3. System nach Anspruch 1, **dadurch gekennzeichnet, dass** sich die Greifelemente (36) im Bezug auf die Arme (34) in die entgegengesetzte Richtung im Bezug auf die Drehrichtung der Arme in der Weise drehen können, dass das Entstapelrad (32) oder das Neustapelrad (32) das Entstapeln oder Neustapeln so ausführt, dass die Ausrichtung der Behälter (14) unverändert bleibt.

4. System nach Anspruch 1, **dadurch gekennzeichnet, dass** es wenigstens eine Glattband-Fördereinrichtung (28) enthält, die in der Lage ist zu bewirken, dass sich die Behälter (14) in der Ausbildungsrichtung des Stapels (12) bewegen.

5. System nach Anspruch 4, **dadurch gekennzeichnet, dass** die Fördereinrichtung (28, 30) eine größere Geschwindigkeit hat als die Bewegungsgeschwindigkeit des Hebeelementes (24).

6. System nach Anspruch 1, **dadurch gekennzeichnet, dass** es eine Reinigungseinheit (46) enthält, die mit einem Paar seitlicher Förderbänder (48) versehen ist, die in der Lage sind, die Behälter (14) zu bewegen, ohne dass die offene Seite der Behälter versperrt wird.

7. System nach Anspruch 6, **dadurch gekennzeichnet, dass** die Reinigungseinheit (46) eine Einrichtung (50) enthält, um Luftstrahlen zuzuführen und so Festkörperverschmutzungen von der Innenseite der Behälter (14) zu entfernen.

8. System nach Anspruch 1, **dadurch gekennzeichnet, dass** es eine Station zum Schließen beweglicher Arme (58) der Behälter (14) enthält, wobei diese Station eine Vielzahl sich drehender Betätigungselemente (60) aufweist, die jeweils ein Profil haben, das dem Freiheitsgrad der Positionen des beweglichen Arms (58) des Behälters (14) entlang seiner Schließbewegungsbahn entspricht.

9. Verfahren zur Handhabung wiederverwendbarer Behälter, umfassend folgende Schritte:
- Zuführen eines Stapels (12) verschachtelter Behälter (14) einer Entstapeleinheit (10),
- Entnehmen einzelner Behälter von einem Stapel (12) und Zuführen der Behälter (14) einer Reinigungs- und/oder Wasch- und/oder Trocknungseinheit, und
- Stapeln der einzelnen Behälter (14), um so einen Stapel (12) verschachtelter, wiederhergestellter Behälter auszubilden,
**dadurch gekennzeichnet, dass** es folgende Schritte umfasst:
- Fortbewegen eines Stapels (12) verschachtelter Behälter (14), der zerlegt werden soll, in kontinuierlicher Art und Weise in einer vertikalen Richtung,
- Ausführen einer Vorextraktion der Behälter (14) an der Oberseite des Stapels (12), der zerlegt wird,
- Entnehmen einzelner Behälter von der Oberseite eines Stapels (12) der zerlegt wird, mit Hilfe eines Entstapelrades (32), das sich fortwährend um eine horizontale Achse dreht und eine Vielzahl von Armpaaren (34) enthält, die mit Greifelementen (36) versehen sind, die in der Lage sind, die Behälter (14) seitlich zu greifen, und in der Lage sind, die einzelnen Behälter (14) zu nehmen und sie auf einer Fördereinrichtung abzusetzen,
- Neustapeln wiederhergestellter Behälter (12) mit Hilfe eines Neustapelrades (32), das sich fortwährend um eine horizontale Achse dreht und eine Vielzahl von Armpaaren (34) enthält, die mit Greifelementen (36) ausgestattet sind, die in der Lage sind, die Behälter (14) seitlich zu greifen, und in der Lage sind, einzelne Behälter aufzunehmen, die sich auf der Fördereinrichtung (16) fortbewegen, und die einzelnen Behälter (14) auf der Oberseite eine Stapels (12) abzusetzen, der ausgebildet wird.

## Revendications

1. Système pour la manipulation de boîtes réutilisables, comprenant :
- un transporteur (20) pour faire avancer des piles (12) de boîtes en prise mutuelle (14),
- une unité de dégerbage (10) capable de retirer des boîtes individuelles destinées à être remises en état (14) à partir des piles (12), et
- une unité de regerbage (10) capable de gerber des boîtes successives (14) pour former des piles de boîtes remises en état en prise mutuelle,
- l'unité de dégerbage et l'unité de regerbage (10) comprennent chacune :
- une structure de support stationnaire (22), et
- un élément élévateur (24) mobile dans une direction verticale et supportant une pile (12) en train d'être formée ou décomposée,
**caractérisé en ce que** l'unité de dégerbage (10) comprend en outre :
- au moins un distributeur à courroie (30) capable réaliser une pré-extraction des boîtes (14) au niveau de la partie supérieure de la pile (12) en train d'être décomposée, et
- une roue de dégerbage (32) tournant autour d'un axe horizontal et comprenant une pluralité de paires de bras (34) équipés d'éléments de préhension (36) capables de saisir les boîtes (14) latéralement et capables de prendre des boîtes individuelles à partir de la partie supérieure d'une pile (12) en train d'être décomposée et déposer les boîtes individuelles (14) sur un transporteur (16),
et dans lequel l'unité de regerbage (10) comprend une roue de regerbage (32) tournant autour d'un axe horizontal et comprenant une pluralité de paires de bras (34) équipés d'éléments de préhension (36) capables de saisir les boîtes (14) latéralement et capables de prendre des boîtes individuelles qui avancent sur ledit transporteur et déposer les boîtes individuelles (14) au niveau de la partie supérieure d'une pile (12) en train d'être formée.

2. Système selon la revendication 1, **caractérisé en ce que** les éléments de préhension (36) sont fixes par rapport auxdits bras (34), de sorte que la roue de dégerbage (32) ou la roue de regerbage (32) réalise l'opération de dégerbage ou regerbage en retournant les boîtes (14).

3. Système selon la revendication 1, **caractérisé en ce que** les éléments de préhension (36) peuvent tourner par rapport aux bras (34) dans la direction opposée par rapport à la direction de rotation des bras, de manière telle que la roue de dégerbage (32) ou la roue de regerbage (32) réalise l'opération de dégerbage ou regerbage en maintenant l'orientation des boîtes (14) constante.

4. Système selon la revendication 1, **caractérisé en ce qu'**il comprend au moins un distributeur à courroie lisse (28) capable de faire avancer les boîtes (14) dans la direction de formation de la pile (12).

5. Système selon la revendication 4, **caractérisé en ce que** ledit distributeur (28, 30) possède une vitesse supérieure à la vitesse du mouvement de l'élément élévateur (24).

6. Système selon la revendication 1, **caractérisé en ce qu'**il comprend une unité de nettoyage (46) pourvue d'une paire de courroies de transporteur latérales (48) capables de déplacer les boîtes (14) sans gêner le côté ouvert des boîtes.

7. Système selon la revendication 6, **caractérisé en ce que** l'unité de nettoyage (46) comprend des moyens (50) pour fournir des jets d'air pour éliminer les déchets solides à partir de l'intérieur des boîtes (14).

8. Système selon la revendication 1 **caractérisé en ce qu'**il comprend un poste pour fermer des bras mobiles (58) des boîtes (14), ledit poste comprenant une pluralité d'éléments d'actionnement rotatifs (60) possédant chacun un profil correspondant à l'enveloppe des positions du bras mobile (58) de la boîte (14) le long de sa trajectoire de fermeture.

9. Procédé pour la manipulation de boîtes réutilisables, comprenant les étapes consistant à :
- distribuer une pile (12) de boîtes en prise mutuelle (14) à une unité de dégerbage (10),
- retirer des boîtes individuelles à partir d'une pile (12) et distribuer les boîtes (14) à une unité de nettoyage et/ou lavage et/ou séchage, et
- gerber les boîtes individuelles (14) afin de former une pile (12) de boîtes remises en état en prise mutuelle,
**caractérisé en ce qu'**il comprend les étapes consistant à :
- faire avancer de manière continue dans une direction verticale une pile (12) de boîtes en prise mutuelle (14) en train d'être décomposée,
- réaliser une pré-extraction des boîtes (14) au niveau de la partie supérieure de la pile (12) en train d'être décomposée,
- retirer des boîtes individuelles à partir de la partie supérieure d'une pile (12) en train d'être décomposée au moyen d'une roue de dégerbage (32) tournant en continu autour d'un axe horizontal et comprenant une pluralité de paires de bras (34) équipés d'éléments de préhension (36) capables de saisir les boîtes (14) latéralement et capables de prendre et déposer les boîtes individuelles (14) sur un transporteur (16),
- regerber des boîtes remises en état (12) au moyen d'une roue de regerbage (32) tournant en continu autour d'un axe horizontal et comprenant une pluralité de paires de bras (34) équipés d'éléments de préhension (36) capables de saisir les boîtes (14) latéralement et capables de prendre des boîtes individuelles qui avancent sur ledit transporteur (16) et déposer les boîtes individuelles (14) au niveau de la partie supérieure d'une pile (12) en train d'être formée.
